# EUROPÄISCHE PATENTSCHRIFT

(11) **EP 2 039 592 B1**
(45) Veröffentlichungstag und Bekanntmachung des Hinweises auf die Patenterteilung: **25.05.2011**
(21) Anmeldenummer: 07018588.9
(22) Anmeldetag: 21.09.2007
(51) Int. Cl.: B62D 21/15

(54) **Kraftfahrzeug-Frontendmodul**
Motor vehicle - front end module
Module avant de véhicule automobile

(43) Veröffentlichungstag der Anmeldung: 25.03.2009
(73) Patentinhaber: PEGUFORM GMBH, 79268 Bötzingen (DE)
(72) Erfinder: Rinderlin, Jürgen, 79279 Vörstetten (DE)
(74) Vertreter: Neunert, Peter Andreas

(56) Entgegenhaltungen:
- EP-A- 0 519 776
- EP-A- 0 949 092
- EP-A- 1 038 733
- EP-A- 1 504 966
- WO-A-02/36414
- WO-A-2007/065629
- DE-A1- 10 105 562
- DE-A1- 19 924 744
- DE-A1-102004 030 794
- FR-A- 2 805 504
- FR-A- 2 820 390
- US-B1- 6 199 937

## Beschreibung

Die vorliegende Erfindung betrifft ein Kraftfahrzeug-Frontendmodul gemäß dem Oberbegriff des Anspruchs 1.

Ein solches Frontendmodul ist aus der FR 2 805 504 A1 bekannt.

Es ist allgemein bekannt, die Frontstruktur von Kraftfahrzeugen mit einem Frontendträger und einem mit dem Frontendträger verbundenen Crash-Management-System auszurüsten. Während der Frontendträger für den Zusammenhalt der Frontstruktur verantwortlich ist, soll das Crash-Management-System im Falle einer Kollision Aufprallenergie gezielt absorbieren. Diese Energieabsorption dient vor allem der Reduzierung der Kräfte, welche auf einen Fahrzeugführer eines Fahrzeuges im Falle eines Zusammenstoßes einwirken, gleichzeitig sollen aber auch wertvolle Bauteile im Frontbereich des Fahrzeugs vor einer Beschädigung geschützt werden.

Der Frontbereich eines Kraftfahrzeuges lässt sich in Fahrtrichtung in unterschiedliche Crash-Bereiche einteilen, welche in Abhängigkeit von der jeweiligen Aufprallgeschwindigkeit aktiviert werden und dabei die Energie der Kollision aufnehmen. So wird bspw. in einem ersten Crash-Bereich der Impuls der dynamischen Aufprallenergie bei einer Geschwindigkeit von 4-8 km/h im Wesentlichen vom Biegeträger und dem Stoßfänger absorbiert. Ein zweiter Crash-Bereich zur Absorption des Impulses einer dynamischen Aufprallenergie bis zu einer Geschwindigkeit von 16 km/h wird üblicherweise durch sog. Crash-Boxen gebildet, die zwischen Biegeträger und Frontendträger angeordnet sind.

Zur Einstufung von Fahrzeugen in Versicherungsklassen wird unter anderem ein sogenannter AZT (Allianz Zentrum für Technik) Crash-Reparaturtest durchgeführt, bei dem die Reparaturfreundlichkeit von Kraftfahrzeugen bzw. die Schadenshöhe bestimmt wird.

Um die Anforderungen eines AZT-Crash-Tests (16 km/h) zu erfüllen und damit eine günstige Einstufung in der Versicherungsklasse zu erhalten, ist für jedes Fahrzeug ein Crash-Management-System erforderlich, das die Energie im Wesentlichen absorbiert und damit größere Beschädigungen des Fahrzeugs selbst oder wertvoller Bauteile im Frontbereich verhindert. Für den 16-km/h-Bereich besteht das Crash-Management-System üblicherweise aus einem Biegeträger und zwei Crash-Boxen. Aufgabe des Crash-Management-Systems ist es, die bei einer Kollision bis zu einer Geschwindigkeit von 16 km/h eingeleitete Energie so gut wie möglich zu absorbieren, um Beschädigungen am Fahrzeug so gering wie möglich zu halten. Je geringer das Schadensbild ist, desto günstiger ist die Einstufung des Fahrzeuges bei der Versicherung.

Die einzelnen Bauteile oder Komponenten (Biegeträger, Crash-Boxen), aus denen das Crash-Management-System aufgebaut ist, werden heute üblicherweise aus metallischen Werkstoffen hergestellt. Dabei ist insbesondere die separate Herstellung der Crash-Boxen aufwändig und erfordert in der Regel mehrere Fertigungsschritte, was das gesamte System entsprechend verteuert. Nach einer separaten Fertigung werden die Crash-Boxen mit dem Biegeträger zum Crash-Management-System kombiniert. Das Crash-Management-System wird dann in einem nächsten Schritt an den Frontendträger bzw. an die Fahrzeugstruktur montiert.

Neben den vielen Verfahrensschritten besteht ein weiterer Nachteil dieser Fertigung darin, dass das Crash-Management-System aus Crash-Boxen und Biegeträger - so wie es üblicherweise vorgefertigt und vormontiert wird - eine relativ geringe Packungsdichte aufweist, was den Transport des Crash-Management-Systems vom Zulieferer zum Fahrzeughersteller zusätzlich verteuert.

Ein weiteres Beispiel für ein Frontendmodul, das dem oben geschilderten Stand der Technik entspricht und die geschilderten Nachteile des Standes der Technik aufweist, wird in der DE 101 19 114 A1 beschrieben, wobei ein als Aufprallträger ausgebildeter Querträger unter Zwischenfügung einer Crash-Box an den Karosserielängsträgern befestigt ist. Dabei ist der Montageträger mit jeder Crash-Box lösbar verschraubt.

Der vorliegenden Erfindung lag somit das Problem zugrunde, ein Crash-Management-System anzubieten, das die Nachteile des Standes der Technik nicht aufweist.

Gelöst wird diese Aufgabe mit einem Kraftfahrzeug-Frontendmodul mit den Merkmalen des Anspruchs 1. Vorteilhafte Ausführungsformen dieses Frontendmoduls sind in den Unteransprüchen 2 bis 8 wiedergegeben.

Die Aufgabe wird ebenfalls durch ein Verfahren zur Herstellung eines Frontendmoduls gemäß Anspruch 9 gelöst.

Die Grundidee der vorliegenden Erfindung besteht darin, die Crash-Box direkt während des Fertigungsprozesses des Frontendträgers an den Frontendträger anzuformen. Dies hat den Vorteil, dass die Crash-Box nicht mehr wie bisher in einem separaten Fertigungsschritt gefertigt werden muss, wodurch Zeit und Kosten eingespart werden, denn es werden keine zusätzlichen Werkzeuge, Vorrichtungen oder Verfahrensschritte zur Herstellung der Crash-Box benötigt. Hinzu kommt, dass bei der Montage des Frontendmoduls, das aus Frontendträger, Crash-Box und Biegeträger besteht, ein weiterer Arbeitsgang eingespart wird.

Gemäß dem Stand der Technik werden die separat hergestellten Crash-Boxen, die üblicherweise aus metallischen Werkstoffen bestehen, zunächst mit dem Biegeträger, der meist ebenfalls aus Metall besteht, zu einem Crash-Management-System aus Biegeträger und Crash-Box vormontiert.

Die Frontendträger dagegen werden in separaten Fertigungslinien gefertigt und bestehen heute meist aus nichtmetallischen Werkstoffen. Die einzelnen Fertigungen finden daher in der Regel nicht nur an unterschiedlichen Orten, sondern häufig auch in unterschiedlichen Unternehmen statt, so dass zur Montage des Frontendmoduls mehr oder weniger lange Transportwege zurückgelegt werden müssen. Das Crash-Management-System aus Biegeträger und Crash-Box ist jedoch relativ sperrig und es können beim Transport nur geringe Packungsdichten realisiert werden.

Im Falle der erfindungsgemäßen, direkt am Frontendträger angeformten Crash-Box muss nun nur noch der Biegeträger transportiert werden, wobei deutlich höhere Packungsdichten beim Transport erreicht werden können. Der Frontendträger mit integrierter Crash-Box erfordert dagegen keine wesentlich aufwändigere Logistik als der Transport eines herkömmlichen Frontendträgers, so dass mit der vorliegenden Erfindung auch in dieser Hinsicht ein tatsächlicher Vorteil erreicht und nicht lediglich das Problem verlagert wird.

Die Crash-Box ist so an den Frontendträger angeformt, dass der Biegeträger durch Anschrauben oder Schweißen über einen Metalleinleger oder durch direktes Anschrauben mit der Crash-Box verbunden werden kann.

Häufig werden Frontendträger heute aus thermoplastischem Kunststoff über einen Formgebungsprozess für Kunststoffe, wie z.B. Spritzgießen, Verpressen oder einem Strangablegeverfahren, bzw. über Hybridverfahren hergestellt, wobei Fremdteile (Hybride) in die Kunststoffmatrix eingelagert oder nachträglich anmontiert werden. Bei diesen Verfahren kann durch entsprechendes Abändern und Anpassen des jeweiligen Formwerkzeuges nun die Crash-Box direkt bei der Herstellung des Frontendträgers angeformt werden, wobei die üblichen Materialien, die bei diesen Verfahren eingesetzt werden, als Ausgangsstoffe in Frage kommen. So können faserverstärkte thermoplastische Kunststoffe aus der Gruppe Polypropylen (PP), Polyethylen (PE) oder Polyamid, faserverstärkte Duroplaste (SMC = sheet molding compound) aus der Gruppe Polyesterharze, Vinylharze oder Phenol-Formaldehydharze, Metall-Kunststoff-Verbundmaterialien, Kunststoff-Kunststoff-Verbundmaterialien oder glasfaserverstärkte Kunststoffe (GMT) eingesetzt werden.

Die Geometrie der angeformten Crash-Box richtet sich nach den Absorptions-Anforderungen, die an das Crash-Management-System gestellt werden, und kann individuell den jeweiligen Erfordernissen angepasst werden, wobei alle für den Fachmann plausible Formen, wie z.B. zylindrische, konische, trapezförmige und kastenförmige Formen oder auch Pyramidenstümpfe etc., in Frage kommen.

Üblicherweise besteht das Crash-Management-System aus einem Biegeträger und insgesamt zwei Crash-Boxen, die jeweils an einem Seitenteil des Frontendträgers befestigt sind. Bei einer derartigen Konstellation kann es bspw. opportun sein, die Crash-Box auf der Fahrerseite anders auszuführen als auf der Beifahrerseite. Derartige unterschiedliche Ausführungsformen für die Crash-Box können bei dem beschriebenen Verfahren problemlos realisiert werden, da dazu lediglich eine entsprechende Anpassung des Formwerkzeuges oder des Herstellverfahrens für den Frontendträger erforderlich ist, was ohne großen zusätzlichen Aufwand möglich ist.

Die geometrische Form der erfindungsgemäß angeformten Crash-Box ist ein Konus.

Die Formgebungsverfahren in der Kunststofftechnologie, wie Spritzgießen, Verpressen oder Strangablegeverfahren erlauben es, dass vor der Fertigung des jeweiligen Formteiles Fremdteile (Hybride) in das Werkzeug eingelegt werden, die dann beim Formgebungsverfahren umformt werden. So können bspw. im Bereich der anzuformenden Crash-Box zusätzlich Metallteile eingelegt werden, die später bspw. als Aufnahmevorrichtung für den Querträger oder als Deformationselemente für die Crash-Box selber genutzt werden können. Die eingelegten Fremdteile beschränken sich dabei nicht auf Metall, sondern es können auch andere Crash-taugliche Materialien, wie z. B. Glasgewebe oder Karbonfasern, eingelegt werden, mit denen dann das Crash-Verhalten der Crash-Box optimiert wird. Die Funktion potenzieller Einlegeteile beschränkt sich jedoch nicht auf die Optimierung der Crash-Box selber, sondern sie können auch andere Funktionen erfüllen, die von der Crash-Box selber unabhängig sind. So kann bspw. bei der Herstellung des Frontendträgers im Bereich der anzuformenden Crash-Box eine Abschleppöse integriert werden, die dann bei der Fertigung umformt wird.

Erfindungsgemäß ist am Frontendträger als weiteres Bauteil ein Kühlermodul angeordnet. Wenn die Aufprallenergie einer Kollision einen bestimmten Wert überschreitet und nicht mehr vollständig von der Crash-Box aufgenommen werden kann, wird die überschüssige Energie von dem Frontendträger aufgenommen und es besteht dann die Gefahr, dass das am Frontendträger befestigte Bauteil, nämlich das Kühlermodul, beschädigt wird. Während der Frontendträger selber ein relativ preiswertes Bauteil ist, ist das Kühlermodul nicht nur als Bauteil alleine schon sehr teuer, sondern hat auch noch die wichtige Funktion, ein Überhitzen des Motors zu verhindern.

Dies führt dazu, dass für diesen Bereich besondere Schutzmaßnahmen getroffen werden, um das Kühlermodul vor Beschädigungen bei einem Crash zu schützen. Die vorliegende Erfindung sieht nun vor, dass der Frontendträger einen über Sollbruchstellen lösbaren Teilbereich (Opferteil) aufweist, der die angeformte Crash-Box umfasst. An diesem Opferteil ist das Kühlermodul befestigt. Wenn im Kollisionsfall die Aufprallenergie den Wert überschreitet, der von der Crash-Box alleine aufgenommen werden kann, wird dieser Teilbereich vom Biegeträger über die Crash-Box beaufschlagt und bricht mitsamt dem daran befestigten Kühlermodul aus dem Frontendträger heraus und wird dabei nach hinten verschoben, ohne dass das Kühlermodul selber beschädigt wird. Eine vorteilhafte Ausführungsform der Ausbildung des Teilbereichs oder Opferteils besteht darin, die Sollbruchstelle direkt in Form einer Sollbruchkerbe bei der Fertigung des Frontendträgers vorzusehen.

Im Folgenden wird die vorliegende Erfindung anhand von Abbildungen ausführlich erläutert, dabei zeigen:
- Fig. 1: eine perspektivische Darstellung eines Frontendträgers mit angeformter Crash-Box sowie einen passenden Biegeträger,
- Fig. 2: eine perspektivische Darstellung des montierten Frontendmoduls aus Figur 1,
- Fig. 3: eine perspektivische Darstellung eines weiteren Frontendträgers mit einem korrespondierenden Biegeträger,
- Fig. 4: einen Ausschnitt aus einem Frontendträger und die

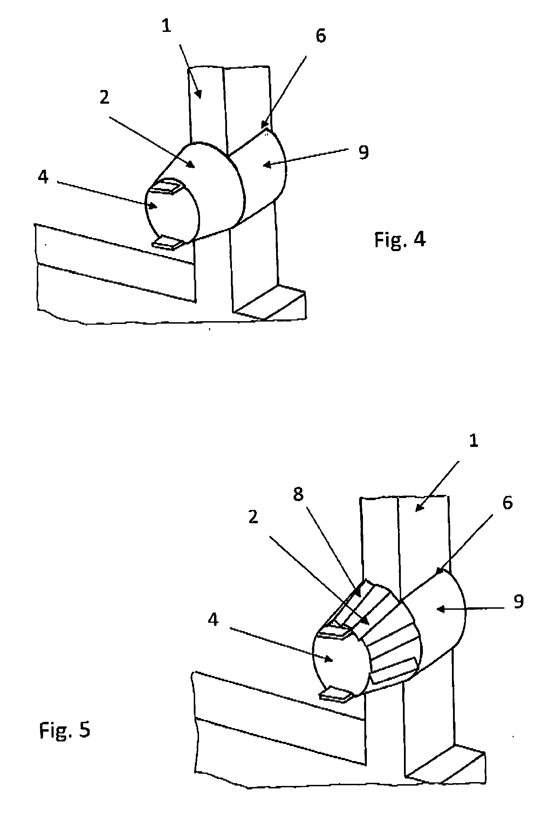

- Fig. 4-6: jeweils Ausschnitte aus einem Frontendträger mit unterschiedlichen Crash-Boxen.

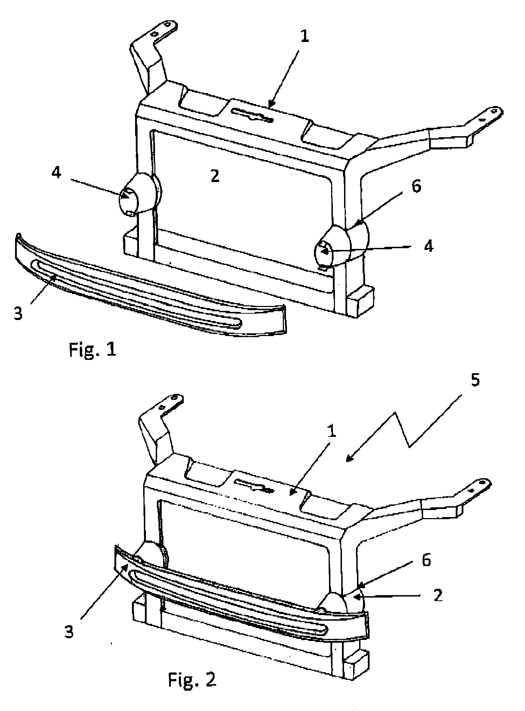

In der Fig. 1 ist ein Frontendträger 1 mit einer im Bereich der Seitenteile des Frontendträgers 1 direkt angeformten, konusförmigen Crash-Box 2 zu erkennen. Im Frontbereich der Crash-Box 2 sind Metalleinleger 4 zu erkennen, die als Aufnahme für den Biegeträger 3 vorgesehen sind, wobei der Biegeträger 3 angeschraubt oder angeschweißt werden kann.

Die Fig. 2 zeigt das fertig montierte Frontendmodul 5 mitsamt Frontendträger 1, Crash-Box 2 und Biegeträger 3.

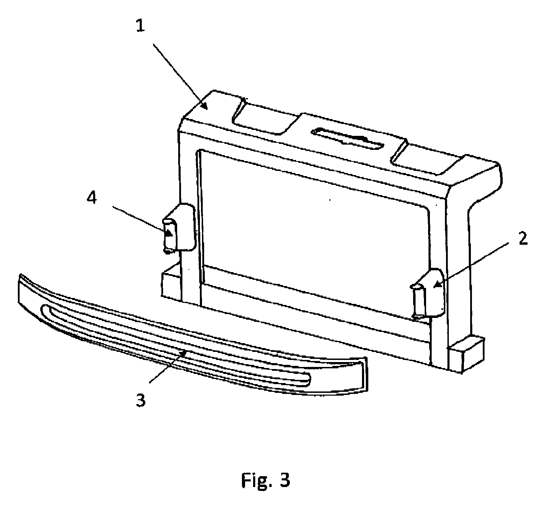

Die Figur 3 zeigt eine Variante eines Frontendträgers 1 mit angeformten Crash-Boxen 2, die in diesem Fall eine trapezartige Kegelstumpf-Geometrie aufweisen. Auch bei diesen Crash-Boxen 2 sind wieder Metalleinleger 4 zu erkennen, die als Befestigung für den Biegeträger 3 herangezogen werden können.

Die Figuren 4-6 zeigen jeweils Ausschnitte aus einem Frontendträger 1 mit einer angeformten Crash-Box 2.

In der Fig. 4 ist eine konusförmige Crash-Box 2 zu erkennen mit einem eingespritzten Metalleinlegeteil 4. Dabei ist die Crash-Box 2 über eine Sollbruchstelle 6 mit dem Frontendträger 1 verbunden. Damit ist vorgesehen, dass im Falle eines stärkeren Aufpralles, dessen Energie alleine von der Crash-Box 2 nicht mehr absorbiert werden kann, die Crash-Box 2 zusammen mit dem Opferteil 9 aus dem Frontendträger 1 herausbricht und zusammen mit daran befestigten Bauteilen, u.a. erfindungsgemäß einem Kühlermodul, nach hinten verschoben und damit vor einer Beschädigung geschützt wird.

In der Fig. 5 sind zusätzlich eingeformte Einlegeteile 8 zu erkennen, mit deren Hilfe eine Optimierung des Crash-Verhaltens der Crash-Box 2 erreicht werden kann. Als Einlegeteile 8 kommen Metallteile, aber auch Glasgewebe oder Karbonfasern in Frage.

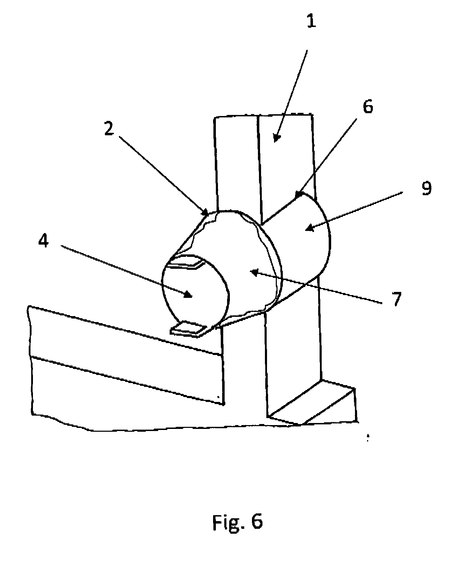

Für eine weitere Ausführungsform ist in Fig. 6 die Crash-Box 2 als umspritztes Hybrid 7 dargestellt, das in das Formwerkzeug eingelegt und dann bei der Fertigung des Frontendträgers 1 mit thermoplastischem Kunststoff umformt wird. Um dieses Prinzip deutlicher herauszustellen, ist bei dieser Darstellung im Bereich der Crash-Box 2 der umhüllende thermoplastische Kunststoff zeichnerisch entfernt worden, sodass das Einlegeteil 7 zu erkennen ist. Als Einlegeteile 7, 8 kommen Blechteile, Glasgewebe oder Karbonfasern, aber auch jedes andere Crash-taugliche Material in Frage.

### Bezugszeichenliste

- 1: Frontendträger
- 2: Crash-Box
- 3: Biegeträger
- 4: Metalleinleger
- 5: Frontendmodul
- 6: Sollbruchkerbe
- 7: Einlegeteil
- 8: Einlegestreifen
- 9: Opferteil

## Patentansprüche

1. Kraftfahrzeug-Frontendmodul (5) mit einem Frontendträger (1), wobei der Frontendträger (1) mindestens einen als Opferteil (9) ausgebildeten Teilbereich aufweist, einem Biegeträger (3), mindestens einer Crash-Box (2) und einem Kühlermodul, wobei
- die mindestens eine Crash-Box (2) direkt an den Frontendträger (1) angeformt ist,
- die Crash-Box (2) eine auf die Absorptionsforderungen eines Crash-Management-Systems abgestimmte Geometrie aufweist, wobei die Crash-Box einen Konus ausbildet,
- der Biegeträger (3) über die Crash-Box (2) direkt mit dem Frontendträger (1) verbunden ist,
- der als Opferteil (9) ausgebildete Teilbereich des Frontendträgers (1) die mindestens eine, dem Frontendträger (1) direkt angeformte Crash-Box (2) umfasst und im Kollisionsfall vom Biegeträger (3) beaufschlagt über Sollbruchstellen (6) lösbar gegenüber dem Frontendträger (1) ausgebildet ist, **dadurch gekennzeichnet, dass** das Kühlermodul an dem Opferteil (9) befestigt ist und das Opferteil (9) zusammen mit dem daran gelagerten Kühlermodul im Kollisionsfall nach hinten verschiebbar ist.

2. Frontendmodul (5) nach Anspruch 1,
**dadurch gekennzeichnet, dass** die mindestens eine Crash-Box (2) einen Metalleinleger (4) aufweist, über den der Biegeträger (3) durch Anschrauben oder Schweißen mit dem Frontendträger (1) verbunden ist.

3. Frontendmodul (5) nach Anspruch 1 oder 2,
**dadurch gekennzeichnet, dass** der Frontendträger (1) mitsamt integrierter Crash-Box (2) in einem Formgebungsprozess für Kunststoffe, wie z.B. Spritzgießen, Verpressen oder einem Strangablegeverfahren, hergestellt ist.

4. Frontendmodul (5) nach einem der Ansprüche 1 bis 3,
**dadurch gekennzeichnet, dass** der Frontendträger (1) mitsamt integrierter Crash-Box (2) über eine Hybridtechnologie hergestellt ist.

5. Frontendmodul (5) nach einem der Ansprüche 1 bis 4,
**dadurch gekennzeichnet, dass** das Material für den Frontendträger (1) ausgewählt ist aus der Gruppe umfassend faserverstärkte thermoplastische Kunststoffe, wie z.B. faserverstärktes Polypropylen (PP), Polyethylen (PE) oder Polyamid (PA), faserverstärkte Duroplaste (SMC), wie z.B. faserverstärkte Polyesterharze, Vinylesterharze oder Phenol-Formaldehydharze, Metall/Kunststoff-Verbundmaterialien, Kunststoff/Kunststoff-Verbundmaterialien und Glasmattenthermoplaste (GMT, GMTex).

6. Frontendmodul (5) nach einem der Ansprüche 1 bis 5,
**dadurch gekennzeichnet, dass** in die mindestens eine Crash-Box (2) eine Abschleppöse integriert ist.

7. Frontendmodul (5) nach Anspruch 6,
**dadurch gekennzeichnet, dass** die Abschleppöse (1) mit dem Material für den Frontendträger (1) umspritzt ist oder umpresst ist.

8. Frontendmodul (5) nach Anspruch 7,
**dadurch gekennzeichnet, dass** die Abschleppöse nachträglich montiert ist.

9. Verfahren zur Herstellung eines Frontendmoduls (5) nach einem der Ansprüche 1 bis 8,
**dadurch gekennzeichnet, dass** mindestens eine Crash-Box (2) mit Hilfe eines Formgebungsverfahrens für Kunststoffe, wie z.B. Spritzgießen, Verpressen oder einem Strangablegeverfahren, direkt an den Frontendträger (1) angeformt wird.

10. Verfahren nach Anspruch 9,
**dadurch gekennzeichnet, dass** die mindestens eine Crash-Box (2) über eine Hybridtechnologie dem Frontendträger (1) direkt angeformt wird.

## Claims

1. A motor vehicle front end module (5) with a front end support (1), wherein the front end support (1) has at least one partial region designed in the form of a sacrificial part (9), a bending support (3), at least one crash box (2) and a radiator module, wherein
- the at least one crash box (2) is moulded directly onto the front end support (1),
- the crash box (2) has a geometry adapted to the absorption requirements of a crash management system, wherein the crash box forms a cone,
- the bending support (3) is directly connected to the front end support (1) by way of the crash box (2),
- the partial region designed in the form of the sacrificial part (9) comprises the at least one crash box (2) moulded directly onto the front end support (1) and in the event of a collision is designed to be detachable, acted upon by the bending support (3), with respect to the front end support (1) by way of pre-determined breaking points (6),
**characterized in that** the radiator module is fastened to the sacrificial part (9), and in the event of a collision the sacrificial part (9) is displaceable towards the rear together with the radiator module mounted thereon.

2. A front end module (5) according to claim 1, **characterized in that** the at least one crash box (2) has a metallic insert (4) by way of which the bending support (3) is connected to the front end support (1) by screw fastening or welding.

3. A front end module (5) according to claim 1 or 2, **characterized in that** the front end support (1) together with the integrated crash box (2) is produced in a shaping process for plastics, such as for example injection moulding, pressing or a continuous casting method.

4. A front end module (5) according to any one of claims 1 to 3, **characterized in that** the front end support (1) together with the integrated crash box (2) is produced by way of a hybrid technology.

5. A front end module (5) according to any one of claims 1 to 4, **characterized in that** the material for the front end support (1) is selected from the group comprising fibre-reinforced thermoplastic plastics, such as for example fibre-reinforced polypropylene (PP), polyethylene (PE) or polyamide (PA), fibre-reinforced thermosetting plastics (SMC), such as for example fibre-reinforced polyester resins, vinyl ester resins or phenol formaldehyde resins, metal / plastics composite materials, plastics / plastics composite materials and glass mat thermoplastics (GMT, GMTex).

6. A front end module (5) according to any one of claims 1 to 5, **characterized in that** a towing eye is integrated into the at least one crash box (2).

7. A front end module (5) according to claim 6, **characterized in that** the towing eye (1) has the material for the front end support (1) injected or pressed around it.

8. A front end module (5) according to claim 7, **characterized in that** the towing eye is mounted afterwards.

9. A method of producing a front end module (5) according to any one of claims 1 to 8, **characterized in that** at least one crash box (2) is moulded directly onto the front end support (1) with the aid of a shaping method for plastics, such as for example injecting moulding, pressing or a continuous casting method.

10. A method according to claim 9, **characterized in that** the at least one crash box (2) is moulded directly onto the front end support (1) by way of a hybrid technology.

## Revendications

1. Module frontal de véhicule automobile (5) comportant un support frontal (1), ce support frontal (1) ayant au moins une zone partielle réalisée comme pièce sacrifiée (9), un support pliant (3), au moins une boîte déformable (crash-box) (2) et un module de radiateur, dans lequel :
- au moins une boîte déformable (2) est formée directement sur le support frontal (1),
- la boîte déformable (2) a une géométrie définie en fonction des conditions d'absorption d'un système de gestion de collision, la boîte déformable formant un cône,
- le support pliant (3) étant relié directement au support frontal (1) par la boîte déformable (2),
- la zone partielle du support frontal (1) réalisée comme pièce sacrifiée (9) comprend au moins une boîte déformable (2) formée directement sur le support frontal (1) et en cas de collision, elle est sollicitée par le support pliant (3) par des points de rupture de consigne (6), en étant amovible par rapport au support frontal (1),
module **caractérisé en ce qu'**
le module de radiateur est fixé à la pièce sacrifiée (9), et
la pièce sacrifiée (9) avec le module de radiateur qu'elle porte, est repoussée vers l'arrière en cas de collision.

2. Module frontal (5) selon la revendication 1,
**caractérisé en ce qu'**
au moins une boîte déformable (2) comporte un insert métallique (4) par lequel le support pliant (3) est relié au support frontal (1) par vissage ou soudage.

3. Module frontal (5) selon la revendication 1 ou 2,
**caractérisé en ce que**
le support frontal (1) avec la boîte déformable (2) intégrée, est réalisé par un procédé de surmoulage de matière plastique, tel que l'injection coulée, la compression ou un procédé de dépose de couche.

4. Module frontal (5) selon des revendications 1 à 3,
**caractérisé en ce que**
le support frontal (1) avec la boîte déformable (2), intégrée, est fabriqué par une technique hybride.

5. Module frontal (5) selon des revendications 1 à 4,
**caractérisé en ce que**
la matière du support frontal (1) est choisie dans le groupe comprenant :
les matières thermoplastiques renforcées par des fibres, telles que des polypropylène (PP) renforcés par des fibres, du polyéthylène (PE) ou un polyamide (PA), des matières thermodurcissables (SMC) renforcées par des fibres, telles que des résines de polyesters renforcées par des fibres, des résines d'ester-vinyle ou des résines phénol-formaldéhydes, des matières composites métal/matière plastique, des matières composites matière plastique/matière plastique, et des matières thermoplastiques à nappe de fibres de verre (GMT, GMTex).

6. Module frontal (5) selon des revendications 1 à 5,
**caractérisé en ce qu'**
au moins un oeillet de remorquage est intégré dans une boîte déformable (2).

7. Module frontal (5) selon la revendication 6,
**caractérisé en ce que**
l'oeillet de remorquage (1) est enrobé par injection ou par compression avec la matière du support frontal (1).

8. Module frontal (5) selon la revendication 7,
**caractérisé en ce que**
l'oeillet de remorquage est installé à postériori.

9. Module frontal (5) selon des revendications 1 à 8,
**caractérisé en ce qu'**
au moins une boîte déformable (2) est formée par un procédé de mise en forme de matière plastique, tel que l'injection coulée, la compression ou par un procédé de dépose de couche, directement sur le support frontal (1).

10. Module frontal (5) selon la revendication 9,
**caractérisé en ce qu'**
au moins une boîte déformable (2) est formée directement sur le support frontal (1) par une technique hybride.
